# FASCICULE DE BREVET EUROPEEN

(11) **EP 2 710 255 B1**
(45) Date de publication et mention de la délivrance du brevet: **26.10.2016**
(21) Numéro de dépôt: 12722775.9
(22) Date de dépôt: 11.04.2012
(51) Int. Cl.: E02B 9/04, E02B 5/08, F03B 3/04, F03B 3/14, F03B 11/08, F03B 13/08, E02B 8/02

(54) **CENTRALE HYDRAULIQUE COMPORTANT UN ENSEMBLE À GRILLE D'ADMISSION D'EAU DANS LA TURBINE AGENCE POUR EVACUER DES DÉBRIS FLOTTANTS ARRÉTÉS PAR LA GRILLE.**
HYDROELEKTRISCHES KRAFTWERK MIT EINER GITTERANORDNUNG ZUR WASSERLEITUNG IN DIE TURBINE ZUR ABLEITUNG VON DURCH DAS GITTER ANGEHALTENEM SCHWEMMMATERIAL
HYDRO-ELECTRIC POWER PLANT COMPRISING A GRATING ASSEMBLY FOR TAKING WATER INTO THE TURBINE, WHICH IS DESIGNED TO DISCHARGE FLOATING DEBRIS STOPPED BY THE GRATING

(30) Priorité: 17.05.2011 FR 1154257
(43) Date de publication de la demande: 26.03.2014
(73) Titulaire: MJ2 Technologies, 12230 La Cavalerie (FR)
(72) Inventeur: FONKENELL, Jacques, F-12100 Millau (FR)
(74) Mandataire: Derambure Conseil
(86) Numéro de dépôt international: PCT/FR2012/050788
(87) Numéro de publication internationale: WO 2012/156604

(56) Documents cités:
- WO-A1-2011/134585
- FR-A1- 2 531 118
- FR-A1- 2 862 723
- US-A- 1 586 754

## Description

L'invention est relative à la protection des turbines de centrales hydrauliques installées sur des ouvrages d'adduction d'eau, contre les débris véhiculés par l'eau qui, s'ils traversaient les roues à pales des turbines, seraient susceptibles de les détériorer ou de perturber leur fonctionnement. L'invention porte plus spécialement sur l'évacuation des débris flottants arrêtés par les grilles des ensembles à grille dont sont pourvues de telles centrales hydrauliques sans que ces débris ne traversent les roues à pales des ensembles à turbine.

L'invention vise le cas d'une centrale hydraulique de type connu, comprenant un ensemble à turbine, incluant :
■ une structure portante dans ou parallèle au plan principal de l'ensemble, comportant une partie principale fermée où est situé un carter cylindrique avec ouvertures amont et aval, et une partie supérieure avec une ouverture,
■ et une turbine à roue à pales, en particulier pouvant être plus ou moins inclinées, montée dans le carter, pouvant avoir une position descendante immergée où l'ensemble est incliné d'amont en aval et du bas vers le haut.

L'invention a pour objet en premier lieu, une centrale hydraulique pour un ouvrage d'adduction d'eau tel qu'incluant un canal d'écoulement d'un flux d'eau limité par une structure ayant un radier et deux murs formant bajoyers, comprenant, associés fonctionnellement, en aval, un ensemble à turbine tel qu'il vient d'être défini, et, en amont, un ensemble à grille d'admission du flux d'eau.

L'invention a pour objet, en deuxième lieu, un ensemble à grille destiné à être associé fonctionnellement à un ensemble à turbine, pour former une telle centrale hydraulique.

L'invention a pour objet, en troisième lieu, un procédé de mise en oeuvre d'une telle centrale hydraulique en vue d'évacuer les débris flottants arrêtés par la grille.

Le document FR-A-2862723 décrit un ensemble à turbine pour centrale hydraulique du type faisant l'objet de l'invention. Une telle centrale hydraulique est destinée à équiper un cours d'eau au niveau d'une très basse chute inférieure à 10 mètres, et de préférence de 1 à 5 mètres. Elle comprend une roue à pales, le rapport entre l'énergie cinétique de l'écoulement d'eau en sortie de la roue et l'énergie potentielle de la chute étant inférieur à 20%. L'ensemble à turbine est équipé du côté amont et en regard de l'ouverture du carter de la roue à pales d'une grille d'admission du flux d'eau apte et destinée à arrêter par son côté amont des débris véhiculés par le flux d'eau d'une taille supérieure à celle des passages qu'elle comporte. En outre, l'ensemble à turbine est équipé du côté amont où se trouve la grille en question, d'un dégrilleur à bras rotatifs associé à la grille ayant pour fonction de la décolmater des débris qui s'accumulent sur elle du côté amont.

Dans des réalisations de ce type, il est souvent prévu, également, une pré-grille d'admission du flux d'eau apte et destinée à être montée avec une position érigée dans et à travers le canal de l'ouvrage d'adduction d'eau, en amont de l'ensemble à turbine. Cette pré-grille a des passages d'une taille plus grande que la taille des passages de la grille équipant l'ensemble à turbine. Ainsi, la pré-grille est apte et destinée à arrêter des débris véhiculés par le flux d'eau de taille importante, tandis que la grille équipant l'ensemble à turbine est apte et destinée à arrêter des débris de taille plus petite. La pré-grille et la grille combinent par conséquent leurs effets. Une telle pré-grille d'admission fait partie d'un ensemble à grille d'admission du flux d'eau qui, outre la pré-grille, inclut des moyens d'association de la prégrille à la structure portante de l'ensemble à turbine ou, plus fréquemment à la structure de l'ouvrage d'adduction d'eau.

Le document FR-A-2531118 décrit une telle pré-grille, laquelle est fixe et inclinée, ce qui fait douter de son efficacité.

Avec de telles réalisations, il est nécessaire de prévoir un nettoyage manuel de la pré-grille lorsque son colmatage atteint un certain degré maximum ou de façon préventive ou régulière. L'on prévoit parfois des aménagements tels qu'une orientation appropriée de la pré-grille pour faciliter l'évacuation des débris flottants, ou un masque plongeant pour faciliter le glissement des débris sur le plan de la pré-grille ou une pré-grille en avancée pour faciliter l'évacuation des débris par le haut.

Cependant, ces aménagements ne sont pas toujours possibles ou faciles à réaliser.
D'autre part, les systèmes de nettoyage automatisés exigés sont coûteux, volumineux et peu adaptés à être intégrés de façon discrète ou esthétique.

Le document FR-A-2835548 décrit un module linéaire articulé de désobstruction de grille, comprenant un racleur porté à l'extrémité d'un bras mobile, ce qui rend ce dispositif inadapté, comme il a été précédemment indiqué.

Ainsi, pour une centrale hydraulique comprenant, associés fonctionnellement, en aval, un ensemble à turbine et, en amont, un ensemble à grille d'admission du flux d'eau, il existe le besoin d'évacuer les débris flottants arrêtés par la grille de l'ensemble à grille pour qu'ils ne traversent pas la roue à pales, de façon efficace, aisée, aussi peu coûteuse que possible au moyen d'un agencement aussi simple, rustique et peu volumineux que possible.

Tel est le problème auquel l'invention apporte une solution.

Le document US 1 586 754 porte sur un dispositif d'alimentation d'eau à double rack, avec une pré-grille ou front rack destinée à arrêter les débris. La grille de retenue ou bottom rack est alors inactive. Lorsque le dispositif double rack est en position haute, la pré-grille ou front rack est disposée sensiblement à l'horizontale et un clapet est ouvert, de sorte que les débris qui étaient sur la pré-grille sont envoyés dans un réservoir et un passage qui est en communication avec un espace. L'eau traverse alors la grille de retenue ou bottom rack qui retient les débris. Après que la pré-grille a été levée, la porte est ouverte et l'eau passé au-dessus de la pré-grille, jusque dans le canal ou passage et, en même temps, lave les débris de la pré-grille, ceux-ci passant dans le canal ou passage autour de la turbine et vers l'aval. Alors, la porte est selon ce que l'on souhaite, ouverte ou fermée.

Comme on le comprend, une réalisation selon le document US 1 586 754 vise une centrale hydraulique très spécifique dont l'ensemble à turbine est d'un type et présente une disposition très particuliers qui n'ont rien à voir avec le type et la disposition d'un ensemble à turbine tel que décrit dans le document FR-A-2862723, type et disposition faisant l'objet de l'invention.

A l'effet de résoudre le problème précédemment mentionné, selon un premier aspect, l'invention a pour objet une centrale hydraulique pour un ouvrage d'adduction d'eau tel qu'incluant un canal et une structure avec radier et bajoyers, comprenant, associés fonctionnellement :
■ en aval, un ensemble à turbine, incluant :
   ○ une structure portante dans ou parallèle au plan principal de l'ensemble, comportant une partie principale fermée où est situé un carter cylindrique avec ouvertures amont et aval, et une partie supérieure avec une ouverture,
   ○ et une turbine à roue à pales, en particulier pouvant être plus ou moins inclinées, montée dans le carter, pouvant avoir une position descendante immergée où l'ensemble est incliné d'amont en aval et du bas vers le haut,
■ en amont, un ensemble à grille d'admission du flux d'eau, apte et destiné à être installé dans et à travers le canal, incluant :
   o une grille portée par une structure portante et qui, remplissant une fonction d'arrêt de débris, est apte et destinée à arrêter par son côté amont des débris véhiculés par le flux d'eau d'une taille supérieure à celle des passages qu'elle comporte,
   o et des moyens d'association de la grille à la structure, aptes et destinés à ce que la grille puisse être disposée dans et à travers le canal dans une position érigée pour assurer la fonction d'arrêt de débris de sorte que la roue à pales soit traversée par un flux d'eau exempt des débris.

Cette centrale hydraulique est telle que :
■ les moyens d'association ont une structure propre à permettre le déplacement d'au moins la portion supérieure de la grille de sorte qu'elle soit apte et destinée à être disposée dans l'une ou l'autre de la position érigée et d'une position rabattue dans laquelle sa partie supérieure est située au-dessus, et en particulier au moins légèrement en aval, de la partie supérieure du bord du carter, pour une fonction d'évacuation de débris flottants arrêtés par la grille vers l'aval et par-dessus son bord supérieur, sans que les débris ne traversent la roue à pales,
■ l'ensemble à grille comporte des moyens de déplacement et de maintien de la grille qui, responsifs à une commande ou à des moyens de commande, sont aptes et destinés à déplacer la grille entre l'une et l'autre de ses deux positions et de la maintenir dans l'une ou l'autre de ses deux positions.

Selon deux réalisations envisageables, l'ensemble à grille et l'ensemble à turbine sont soit disposés au voisinage l'un de l'autre, en particulier de façon adjacente, et associés entre eux structurellement pour former un tout, les moyens d'association de la grille étant alors associés à la structure portante de l'ensemble à turbine, soit dissociés structurellement l'un de l'autre, les moyens d'association de la grille étant alors associés à la structure de l'ouvrage d'adduction d'eau ou à la structure portante de l'ensemble à turbine.

Selon une réalisation, le bord transversal inférieur de l'ensemble à grille et le bord transversal inférieur de l'ensemble à turbine sont proches l'un de l'autre, en particulier sont adjacents, en particulier sont proches du, ou adjacents au, radier.

Selon une réalisation, les moyens d'association de la grille ont une structure, en particulier du type comprenant un arbre monté dans un palier, propre à permettre le pivotement d'au moins la portion supérieure de la grille, autour d'un axe disposé transversalement.

Selon une réalisation, la grille forme un tout solide, déplacé dans son ensemble et disposé dans son ensemble dans l'une ou l'autre des deux positions érigée et rabattue. Et les moyens d'association de la grille ont une structure propre à permettre le pivotement de la grille, autour d'un axe disposé transversalement, proche du, ou adjacent au, radier, en particulier sur une course angulaire entre la position érigée et la position rabattue, comprise entre de l'ordre de 35° à 55°.

Selon une réalisation typique, la grille est associée à pivotement à l'ensemble à turbine autour d'un axe disposé transversalement, proche des, ou adjacent aux, bord transversal inférieur de l'ensemble à grille et bord transversal inférieur de l'ensemble à turbine. Et les moyens d'association de la grille sont associés à la structure portante de l'ensemble à turbine.

Selon une réalisation, les moyens de déplacement et de maintien de la grille sont choisis dans la gamme comprenant des moyens de déplacement linéaire tels qu'un vérin, ou des moyens de déplacement rotatif, tels qu'un moteur rotatif, ou des moyens manuels.

Selon une réalisation, la grille comprend des barreaux, en particulier régulièrement espacés, s'étendant généralement parallèlement les uns aux autres dans une direction apte à être érigée.

Selon une réalisation, la grille est incurvée à convexité tournée vers l'amont et à l'opposé de l'ensemble à turbine et à concavité tournée vers l'aval et vers l'ensemble à turbine, de sorte que dans la position rabattue, la partie supérieure de la grille soit apte et destinée à être horizontale ou faiblement inclinée sur l'horizontale.

Selon une réalisation, et un développement, la centrale hydraulique comporte :
■ un clapet d'un ensemble à clapet ayant une ouverture de clapet, qui :
   o est localisé, d'une part, adjacent à et au-dessus de la partie supérieure du bord du carter de la roue à pales et, d'autre part, vers l'aval et le bord transversal supérieur de la grille dans la position rabattue lequel bord transversal supérieur est situé au niveau de l'ouverture de clapet,
   o est apte et destiné à être disposé dans et à travers le canal,
   o est apte et destiné à être disposé dans l'une ou l'autre de deux positions, une position érigée de fermeture pour une fonction d'arrêt de la lame du flux d'eau en regard, et une position rabattue d'ouverture pour une fonction de passage dudit flux d'eau, sans qu'il ne traverse la roue à pales,
■ des moyens d'association du clapet à la structure portante de l'ensemble à turbine et/ou à la structure portante de la grille et/ou à la structure de l'ouvrage d'adduction d'eau, ayant une structure propre à permettre le déplacement du clapet de sorte qu'il soit apte et destiné à être disposé dans l'une ou l'autre de ses deux positions érigée de fermeture et rabattue d'ouverture,
■ des moyens de déplacement et de maintien du clapet qui, responsifs à une commande ou à des moyens de commande, sont aptes et destinés à déplacer le clapet entre l'une et l'autre de ses deux positions et de le maintenir dans l'une ou l'autre de ses deux positions,
■ et des moyens d'asservissement des moyens de déplacement et de maintien de la grille et des moyens de déplacement et de maintien du clapet ou de leurs commandes ou moyens de commande, de telle sorte que :
   o lorsque la grille est dans la position érigée, le clapet assure une fonction de fermeture, étant apte et destiné à être en position érigée de fermeture de sorte que le flux d'eau ayant préalablement traversé l'ensemble à grille et exempt des débris arrêtés par celui-ci traverse la roue à pales sans pouvoir traverser l'ouverture de clapet,
   o et que, lorsque la grille est dans la position rabattue, le bord transversal supérieur de la grille est situé au niveau de l'ouverture de clapet qui assure une fonction de chasse de débris flottants arrêtés par la grille, vers l'aval du clapet et via l'ouverture de clapet, sans que les débris évacués ne traversent la roue à pales.

Selon une réalisation, l'ensemble à clapet et l'ensemble à turbine sont associés entre eux structurellement, les moyens d'association du clapet étant associés à la structure portante de l'ensemble à turbine.

Selon une réalisation, les moyens d'association du clapet ont une structure, en particulier du type comprenant un arbre monté dans un palier, propre à permettre le pivotement du clapet autour d'un axe disposé transversalement, en particulier vers le bord transversal inférieur du clapet, vers le bord supérieur du carter de la roue à pales et au voisinage du bord transversal supérieur de la grille en position rabattue, en particulier sur une course angulaire entre la position érigée de fermeture et la position rabattue d'ouverture, comprise entre de l'ordre de 50° à 90°.

Selon une réalisation, les moyens de déplacement et de maintien du clapet sont choisis dans la gamme comprenant des moyens de déplacement linéaire tels qu'un vérin, ou des moyens de déplacement rotatif tels qu'un moteur rotatif, ou des moyens manuels.

Selon une réalisation, la centrale hydraulique comporte en outre des moyens de détection du degré de colmatage de la grille associés aux moyens d'asservissement des moyens de déplacement et de maintien de la grille, aux moyens de déplacement et de maintien du clapet, ou à leurs moyens de commande.

Selon une réalisation, le plan principal de l'ensemble à turbine, le plan du clapet dans sa position érigée de fermeture, et le plan défini par les bords transversaux supérieur et inférieur de l'ensemble à grille s'étendent dans un ou des plans, en particuliers voisins, inclinés d'amont en aval et du bas vers le haut avec un angle compris entre 35° et 60°.

Selon une réalisation, la centrale hydraulique comporte en outre une paroi de séparation et de déflection qui s'étend vers l'aval de l'ensemble à turbine et de l'ensemble à clapet, est disposée entre la partie supérieure du bord du carter de la roue à pales et le bord transversal inférieur de l'ouverture de clapet de sorte à séparer les flux d'eau respectifs qui les traversent, la dite paroi de séparation et de déflection étant inclinée d'amont en aval et de haut en bas.

Selon une réalisation, l'ensemble à turbine est équipé du côté amont et en regard de l'ouverture du carter de la roue à pales d'une grille d'admission du flux d'eau apte et destinée à arrêter par son côté amont des débris véhiculés par le flux d'eau d'une taille supérieure à celle des passages qu'elle comporte, ces passages étant d'une taille plus petite que la taille des passages de la grille de l'ensemble à grille, lequel constitue alors un ensemble à pré-grille.

Selon une réalisation particulière, l'ensemble à turbine est équipé du côté amont d'un dégrilleur, en particulier d'un dégrilleur rotatif, associé à la grille d'admission de l'ensemble à turbine, et dans laquelle les moyens de commande des moyens de déplacement du dégrilleur sont associés aux moyens d'asservissement des moyens de déplacement et de maintien de la grille, ou aux moyens de déplacement et de maintien du clapet, ou à leurs moyens de commande.

Selon une réalisation, typique, la roue à pales et le carter de l'ensemble à turbine sont agencés de sorte à être aptes et destinés à êtres disposés dans l'une ou l'autre de deux positions, une position descendante immergée pour une fonction de production électrique, et une position relevée émergée pour une fonction d'accès à l'ensemble à turbine et/ou de libération du canal de passage du flux d'eau. Ainsi, la grille de l'ensemble à grille est déplacée également avec le carter de l'ensemble à turbine.

Selon un deuxième aspect, l'invention a pour objet un ensemble à grille destiné à être associé fonctionnellement à un ensemble à turbine, pour former une centrale hydraulique telle qu'elle vient d'être décrite. Cet ensemble à grille inclut :
■ une grille portée par une structure portante et qui, remplissant une fonction d'arrêt de débris, est apte et destinée à arrêter par son côté amont des débris véhiculés par le flux d'eau d'une taille supérieure à celle des passages qu'elle comporte,
■ des moyens d'association de la grille à la structure portante de l'ensemble à turbine et/ou à la structure de l'ouvrage d'adduction d'eau, ayant une structure propre à permettre le déplacement d'au moins la portion supérieure de la grille de sorte qu'elle soit apte et destinée à être disposée dans l'une ou l'autre de deux positions :
   o une position érigée pour la fonction d'arrêt de débris, et
   o une position rabattue pour une fonction d'évacuation de débris flottants arrêtés par la grille, vers l'aval de la grille et par-dessus son bord transversal supérieur ;
■ des moyens de déplacement et de maintien de la grille qui, responsifs à une commande ou à des moyens de commande, sont aptes et destinés à déplacer la grille entre l'une et l'autre de ses deux positions et de la maintenir dans l'une ou l'autre de ses deux positions.

Selon un troisième aspect, l'invention a pour objet un procédé de mise en oeuvre d'une centrale hydraulique telle qu'elle vient d'être décrite, en vue d'évacuer les débris flottants arrêtés par la grille, dans lequel :
■ on part d'une situation où la grille est dans la position érigée et où le clapet est dans la position érigée de fermeture,
■ on fait fonctionner l'ensemble à turbine, un flux d'eau le traversant,
■ lorsque nécessaire ou souhaité, en particulier lorsque le degré de colmatage de la grille a atteint un certain degré maximum ou pourrait avoir atteint un certain degré maximum :
   ○ on commande le déplacement de la grille et ainsi on déplace la grille depuis sa position érigée pour l'amener dans sa position rabattue,
   o et on commande le déplacement du clapet et ainsi on déplace le clapet depuis sa position érigée de fermeture pour l'amener dans sa position rabattue d'ouverture, de sorte que le bord transversal supérieur de la grille est situé au niveau de l'ouverture de clapet, les débris flottants arrêtés par la grille étant ainsi chassés vers l'aval du clapet et via l'ouverture de clapet, sans qu'ils ne traversent la roue à pales.

Selon une réalisation, avec l'amenée de la grille en position rabattue et l'amenée du clapet en position rabattue, on amène les pales de la roue à pales dans une position où elles tendent à fermer le passage du flux d'eau.

L'invention est maintenant décrite en référence aux dessins annexés dans lesquels :

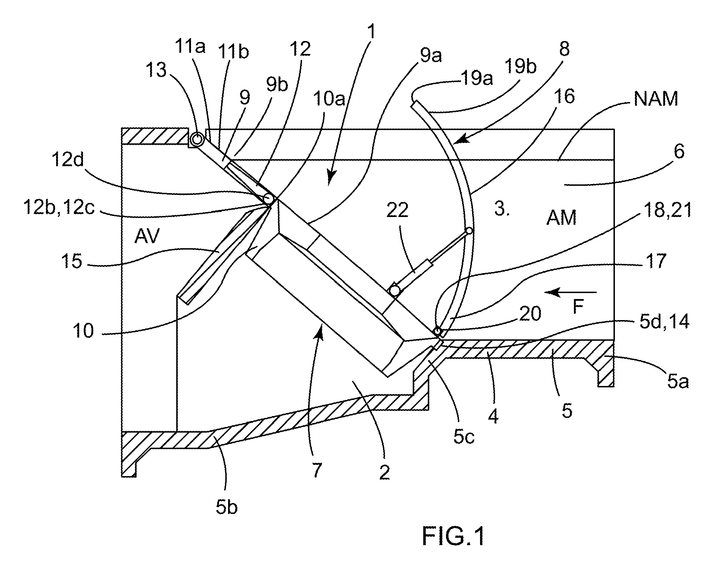

- La figure 1 est une vue schématique en coupe par un plan vertical longitudinal d'une centrale hydraulique installée dans un ouvrage d'adduction d'eau, dans la configuration où la roue à pales et le carter de l'ensemble à turbine sont en position descendante immergée, où la grille est dans la position érigée, et où le clapet est dans la position érigée de fermeture, de sorte que la centrale hydraulique peut produire de l'électricité par suite du passage du flux d'eau dans la roue à pales de la turbine, des débris étant arrêtés du côté amont de la grille de l'ensemble à grille.

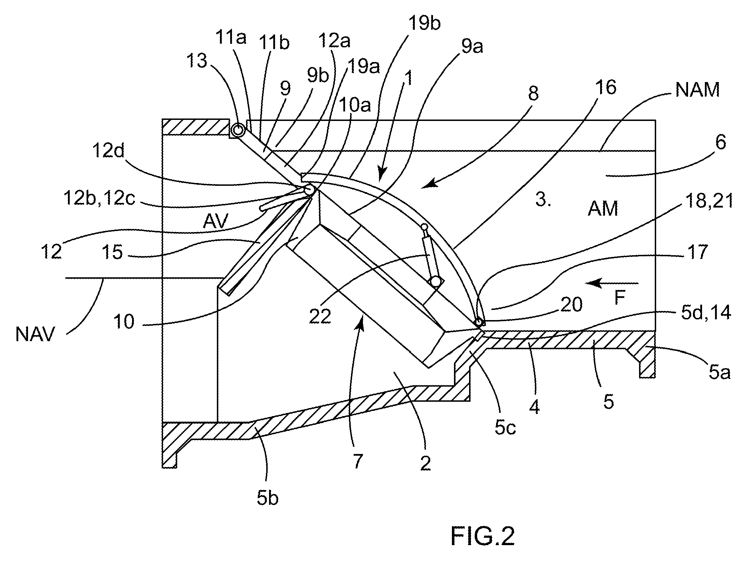

- La figure 2 est une vue schématique analogue à la figure 1, dans la configuration où la roue à pales et le carter de l'ensemble à turbine sont en position descendante immergée, où la grille est dans la position rabattue, et où le clapet est dans la position rabattue d'ouverture, de sorte que le bord transversal supérieur de la grille est situé au niveau de l'ouverture de clapet qui assure une fonction de chasse de débris flottants arrêtés par la grille, vers l'aval du clapet et via l'ouverture de clapet, sans que les débris évacués ne traversent la roue à pales.

On se réfère plus spécialement aux figures 1 et 2 sur lesquelles est représentée de façon schématique une centrale hydraulique 1 installée et associée à un ouvrage d'adduction d'eau 2.

L'ouvrage d'adduction d'eau 2 inclut un canal 3 d'écoulement d'un flux d'eau F et une structure 4 ayant un radier ou fond 5 et deux murs formant bajoyers 6.

La description qui suit est faite en référence au cas où la centrale hydraulique 1 est montée en situation dans l'ouvrage d'adduction d'eau 2. Toutefois, l'invention vise également le cas où la centrale hydraulique 1, ou des ensembles ou parties de celle-ci, n'est pas montée en situation dans l'ouvrage d'adduction d'eau 2.

Les termes tels que « supérieur », « inférieur », « haut », « bas », « au-dessus », « au niveau », « érigé », « rabattu », « incliné », « amont », « aval », « horizontal », « vertical », doivent être compris en relation avec la disposition où la centrale hydraulique 1 est montée en situation dans l'ouvrage d'adduction d'eau 2.

On désigne conventionnellement par « longitudinal » ce qui s'étend dans la direction du canal 3 et par « transversal » ce qui s'étend en travers du canal 3. Il est entendu que les termes « longitudinal », « transversal », « horizontal », « vertical » ne doivent pas en général être interprétés de façon totalement stricte et étroite.

Le canal 3 a par exemple en section transversale une forme générale de U ou de pseudo-U. L'écoulement du flux d'eau F intervient dans le sens allant de l'amont AM à l'aval AV.

Le radier 5 est typiquement plan et généralement horizontal ou légèrement incliné sur l'horizontale. Il comporte dans la réalisation représentée une partie amont 5a et une partie aval 5b située à un niveau plus bas que la partie amont, un décrochement 5c vers le bas reliant la partie amont 5a à la partie aval 5b.

Les deux murs formant bajoyers 6 sont typiquement verticaux ou sensiblement verticaux et parallèles entre eux.

On définit encore par NAM le niveau nominal de l'eau vers l'amont AM et par NAV le niveau nominal de l'eau vers l'aval AV.

Le flux d'eau F est par exemple le flux d'un cours d'eau ou d'une dérivation d'un cours d'eau. De façon typique, le flux d'eau arrivant du côté amont peut charrier vers l'aval des débris solides tels que des débris végétaux (feuilles, branches, plantes... par exemple), des débris animaux (animaux morts par exemple), des débris de toute autre sorte (des détritus, des déchets, des emballages.... par exemple). Le terme « débris » doit être considéré dans son acceptation la plus générique. Ces débris sont de taille plus ou moins régulière ou irrégulière et d'une taille plus ou moins grande.

La centrale hydraulique 1 comprend, associés fonctionnellement l'un avec l'autre, à savoir, en aval, un ensemble à turbine 7 spécifique et, en amont, un ensemble à grille d'admission du flux d'eau 8. L'un et l'autre sont aptes et destinés à être installés dans et à travers le canal 3.

Il est entendu que l'invention vise aussi le cas où la centrale hydraulique 1 comprend plusieurs ensembles à turbine 7 et/ou plusieurs ensembles à grille 8, disposés côte à côte dans le canal 3.

Un tel ensemble à turbine 7 est du type général décrit dans le document FR-A-2862723.

Un tel ensemble à turbine 7 inclut une structure portante 9 et une turbine à roue à pales montée dans un carter 10 ayant une forme de cylindre plat avec une ouverture du côté amont et une ouverture du côté aval. La structure portante 9 s'étend dans un plan qui est le plan principal de l'ensemble à turbine 7, ou qui est parallèle au plan principal de l'ensemble à turbine 7.

La turbine est par exemple de type KAPLAN et, en tout état de cause, les pales sont montées de sorte à pouvoir être inclinées plus ou moins autour d'axes radiaux, la roue à pales étant plus ou moins ouverte ou plus ou moins fermée.

La structure portante 9 comporte une partie principale 9a où est situé le carter 10 et une partie supérieure 9b prolongeant la partie principale 9a vers le haut. La partie principale 9a est fermée à l'exception de la zone en regard des ouvertures du carter 10. La partie supérieure 9b comprend deux bras latéraux 11 a de part et d'autre d'une ouverture 11 b, nonobstant un clapet 12.

Dans la réalisation représentée, les bras latéraux 11a sont, à leurs parties extrêmes supérieures, montés de manière à pouvoir pivoter autour d'un axe transversal supérieur 13. Ainsi, la roue à pales et le carter 10 sont agencés de sorte à être aptes et destinés à être disposés dans l'une ou l'autre de deux positions, une position descendante immergée dans la canal 3, pour une fonction de production électrique (figures 1 et 2), et une position relevée émergée (non représentée) pour une fonction d'accès à l'ensemble à turbine 7 et/ou de libération du canal 3 de passage du flux d'eau F.

Le bord transversal inférieur 14 de la partie principale 9a, et donc de l'ensemble à turbine 7, et ce faisant de sa structure portante 9, est, dans la position descendante immergée, proche du radier 5 ou adjacent à lui. En particulier, le bord transversal inférieur 14 vient reposer sur un siège transversal 5d ménagé vers le décrochement 5c.

Le siège 5d et l'axe 13 sont disposés décalés en direction longitudinale, le premier vers le côté amont AM et le second vers le côté aval AV, de sorte que le plan principal de l'ensemble à turbine 7 dans la position descendante immergée est incliné d'amont en aval et du bas vers le haut avec un angle compris entre 35° et 60°.

L'ensemble à turbine 7 est équipé du côté amont et en regard de l'ouverture du carter 10 d'une grille d'admission du flux d'eau F (non représentée) apte et destinée à arrêter par son côté amont des débris véhiculés par le flux d'eau F d'une taille supérieure à celle des passages qu'elle comporte. Dans une telle réalisation, l'ensemble à grille 8 peut être qualifié d'ensemble à pré-grille 8.

En outre, dans une réalisation possible, l'ensemble à turbine 7 est équipé du côté amont d'un dégrilleur (non représenté), en particulier d'un dégrilleur rotatif, associé à la grille d'admission de l'ensemble à turbine 7.

Dans la réalisation représentée, il est également prévu le clapet 12, lequel fait partie d'un ensemble à clapet ayant également une ouverture de clapet 12a venant en prolongement vers le bas de l'ouverture 11 b.

Le clapet 12 est localisé de sorte à être adjacent à et au-dessus de la partie supérieure 10a du bord du carter 10. Le clapet 12 est apte et destiné à être disposé dans et à travers le canal 3.

Le clapet 12 est apte et destiné à être disposé dans l'une ou l'autre de deux positions. Dans une position érigée de fermeture (figure 1), le plan du clapet 12 est dans le plan principal de l'ensemble à turbine 7 ou dans un plan voisin. Le clapet 12 ferme alors l'ouverture de clapet 12a. Ainsi, le clapet 12 assure une fonction d'arrêt de la lame du flux d'eau F en regard, du côté amont AM et il définit le niveau nominal côté amont NAM.

Dans une position rabattue d'ouverture (figure 2), le clapet 12 est disposé à l'horizontale ou sensiblement à l'horizontale et étant dirigé vers le côté aval AV. Il laisse alors libre l'ouverture de clapet 12a. L'on assure alors une fonction de passage du flux d'eau d'amont en aval via l'ouverture de clapet 12a.

Il est prévu également des moyens d'association du clapet 12 à une structure, telle que, dans la réalisation représentée, la structure portante 9 de l'ensemble à turbine 7, l'ensemble à clapet 12, 12a et l'ensemble à turbine 7 étant alors associés entre eux structurellement. Les moyens d'association du clapet 12 ont une structure propre à permettre le déplacement du clapet 12a de sorte qu'il soit apte et destiné à être disposé dans l'une ou l'autre de ses deux positions érigée de fermeture et rabattue d'ouverture.

Les moyens d'association du clapet 12 ont une structure, en particulier du type comprenant un arbre monté dans un palier, propre à permettre le pivotement du clapet 12 autour d'un axe 12b disposé transversalement, en particulier vers le bord transversal inférieur 12c du clapet, vers le bord de la partie supérieure 10a du carter 10, en particulier sur une course angulaire entre la position érigée de fermeture et la position rabattue d'ouverture, comprise entre de l'ordre de 50° à 90°.

Il est prévu également des moyens de déplacement et de maintien du clapet 12 qui, responsifs à une commande ou à des moyens de commande, sont aptes et destinés à déplacer le clapet 12 entre l'une et l'autre de ses deux positions et de le maintenir dans l'une ou l'autre de ses deux positions. Ces moyens de déplacement et de maintien du clapet 12 sont choisis par exemple dans la gamme comprenant des moyens de déplacement linéaire tels qu'un vérin, ou des moyens de déplacement rotatif tels qu'un moteur rotatif, ou des moyens manuels.

Dans la réalisation représentée, il est également prévu une paroi de séparation et de déflection 15 qui s'étend vers l'aval de l'ensemble à turbine 7 et de l'ensemble à clapet 12, 12a. Cette paroi de séparation et de déflection 15 est disposée entre le bord de la partie supérieure 10a du carter 10 et le bord transversal inférieur 12d de l'ouverture de clapet 12a. Ainsi, l'on peut séparer les flux d'eau respectifs qui traversent le carter 10 et l'ouverture de clapet 12a. Cette paroi de séparation et de détection 15 est ici inclinée d'amont en aval et de haut en bas.

L'ensemble à grille (ou à pré-grille, comme précédemment indiqué) 8 inclut en premier lieu une grille à proprement parler 16, laquelle peut être disposée dans et à travers le canal 3. Il inclut en deuxième lieu une structure portante 17 de la grille 15.

La grille 16 comporte des parties pleines qui peuvent être typiquement des barreaux, en particulier régulièrement espacés, s'étendant généralement parallèlement les uns aux autres dans une direction apte à être érigée. Elle comporte également des passages libres. Dans le cas où l'ensemble à turbine 7 est équipé d'une grille d'admission du flux d'eau comme précédemment indiqué, ses passages sont d'une taille plus petite que la taille des passages de la grille 16 de l'ensemble à grille 8.

Il est prévu également des moyens d'association 18 de la grille 16 à la structure portante 9 de l'ensemble à turbine 7, dans la réalisation représentée sur les figures. Mais, dans d'autres réalisations envisageables, les moyens d'association 18 de la grille 16 sont associés alternativement ou cumulativement à la structure 4 de l'ouvrage d'adduction d'eau 2.

Les moyens d'association 18 de la grille 15 ont une structure propre à permettre le déplacement d'au moins la portion supérieure de la grille 16 opposée au radier 5 de sorte qu'elle soit apte et destinée à être disposée dans l'une ou l'autre de deux positions possibles : une position érigée (figure 1) et une position rabattue (figure 2).

Dans sa position érigée, la grille 16 est érigée de sorte qu'elle intersecte le canal 3 pour que la totalité du flux d'eau qui y circule la traverse, du côté amont AM au côté aval AV. Dans cette position, la grille 16 assure une fonction d'arrêt de débris, arrêtant par son côté amont les débris véhiculés par le flux d'eau d'une taille supérieure à celle des passages qu'elle comporte. Pour cette fonction, le clapet 12, en position érigée de fermeture, assure sa fonction de fermeture. Ainsi, la totalité du flux d'eau ayant préalablement traversé l'ensemble à grille 8 et exempt des débris arrêtés par celui-ci traverse la roue à pales de l'ensemble à turbine 7, sans pouvoir traverser l'ouverture de clapet 12a fermée par le clapet 12.

Dans sa position rabattue, la grille 16 est moins inclinée sur l'horizontale et assure une fonction d'évacuation de débris flottants qui ont été arrêtés par la grille 16. Ces débris sont évacués vers l'aval de la grille16 en passant par-dessus son bord transversal supérieur 19a, lequel bord transversal supérieur 19a est situé au niveau de l'ouverture de clapet 12a, alors ouverte étant donné que le clapet 12 est dans sa position rabattue d'ouverture, tandis que la partie supérieure 19b de la grille 16, attenante au bord 19a est située au-dessus, et en particulier au moins légèrement en aval, du bord de la partie supérieure 10a du carter 10. Ainsi, l'ouverture de clapet 12a assure une fonction de chasse de débris flottants arrêtés par la grille 16, vers l'aval du clapet 12 et via l'ouverture de clapet 12a, sans que les débris évacués ne traversent la roue à pales, compte tenu de la présence et de la disposition de la paroi de séparation et de déflection 15.

Il a été constaté que l'évacuation et chasse de débris qui vient d'être exposée est facilitée si les pales de la roue à pales sont amenées dans une position où elles tendent à fermer le passage du flux d'eau, ce qui est rendu possible par la mise en oeuvre d'une roue à pales déplaçables comme il a été indiqué.

Dans la réalisation représentée sur les figures, l'ensemble à grille 8 et l'ensemble à turbine 7 sont disposés au voisinage l'un de l'autre, en particulier de façon adjacente, et associés entre eux structurellement pour former un tout, les moyens d'association 18 de la grille 16 étant alors associés à la structure portante 9 de l'ensemble à turbine 7, comme précédemment indiqué.

Dans une autre réalisation non représentée, l'ensemble à grille et l'ensemble à turbine sont dissociés structurellement l'un de l'autre. Les moyens d'association de la grille sont alors associés à la structure de l'ouvrage d'adduction d'eau ou à la structure portante de l'ensemble à turbine.

L'invention a pour objet aussi bien la centrale hydraulique 1 comportant l'ensemble à grille 8 et l'ensemble à turbine 7 associés entre eux structurellement pour former un tout, que l'ensemble à grille 8 seul en tant qu'il est apte et destiné à être associé structurellement à l'ensemble à turbine 7 ou qu'il est destiné à être structurellement dissocié de l'ensemble à turbine 7, mais associé fonctionnellement à lui dans la centrale hydraulique en situation.

La description qui suit porte plus spécialement sur la réalisation dans laquelle l'ensemble à grille 8 et l'ensemble à turbine 7 sont associés entre eux structurellement pour former un tout. La réalisation dans laquelle les deux ensembles 7 et 8 sont dissociés est à la portée de l'homme du métier.

Comme indiqué, les positions érigée et rabattue concernent au moins la portion supérieure de la grille 16. Dans la réalisation représentée sur les figures, ces positions concernent la grille 16 elle-même qui forme un tout solide, déplacé dans son ensemble et disposé dans son ensemble dans l'une ou l'autre des deux positions érigée et rabattue. La description qui suit porte plus spécialement sur cette réalisation. La réalisation dans laquelle seule la portion supérieure de la grille 16 est disposée dans l'une ou l'autre des deux positions émergée et rabattue est à la portée de l'homme du métier.

Dans la réalisation où la grille 16 forme un tout solide, comme représenté sur les figures, les moyens d'association 18 de la grille 16 ont une structure propre à permettre le pivotement de la grille 16 dans son ensemble, autour d'un axe 20 disposé transversalement, proche du, ou adjacent au, radier 5. Dans une réalisation la course angulaire entre la position érigée et la position rabattue de la grille 16 est comprise entre de l'ordre de 35° à 55°.

Dans la réalisation représenté sur les figures, la grille 16 est associée à pivotement à l'ensemble à turbine 7, et plus spécialement à sa structure portante 9, autour de l'axe 20 proche des, ou adjacent aux, bord transversal inférieur 21 de l'ensemble à grille 8, donc de la grille 16, et bord transversal inférieur 14 de l'ensemble à turbine 7, donc de la structure portante 9. En outre, les moyens d'association 18 de la grille 16 sont associés à la structure portante 9 de l'ensemble à turbine 7. Dans cette réalisation, le bord transversal inférieur 21 de l'ensemble à grille 8 et le bord transversal inférieur 14 de l'ensemble à turbine 7 sont proches l'un de l'autre, en particulier sont adjacents. Dans cette réalisation, la grille 16 est déplacée également avec le carter 10 de l'ensemble à turbine 7, lorsque celui-ci est agencé de façon mobile entre la position descendante immergée et la position relevée émergée.

Les moyens d'association 18 de la grille 17, qui permettent son pivotement entre les positions érigée et rabattue ont par exemple une structure du type comprenant un arbre monté dans un palier.

Le plan principal de l'ensemble à turbine 7 et le plan défini par les bords transversaux supérieur et inférieur 19a et 21 de l'ensemble à grille 8 s'étendent dans un ou des plans, en particuliers voisins, inclinés d'amont en aval et du bas vers le haut avec un angle compris entre 35° et 60°.

L'ensemble à grille comporte des moyens de déplacement et de maintien 22 de la grille 16 qui, responsifs à une commande ou à des moyens de commande, sont aptes et destinés à déplacer la grille 16 entre l'une et l'autre de ses deux positions érigée et rabattue et de la maintenir dans l'une ou l'autre de ses deux positions. De tels moyens de déplacement et de maintien 22 de la grille 16 sont par exemple choisis dans la gamme comprenant des moyens de déplacement linéaire tels qu'un vérin, ou des moyens de déplacement rotatif, tels qu'un moteur rotatif, ou des moyens manuels. Ici, les moyens de déplacement et de maintien 22 sont interposés entre la structure portante 9 de l'ensemble à turbine 7 et la grille 16.

Dans la réalisation représentée sur les figures, la grille 16 est incurvée de façon constante ou plus ou moins constante, de sorte que sa convexité soit tournée vers l'amont et à l'opposé de l'ensemble à turbine 7 et que sa concavité soit tournée vers l'aval et vers l'ensemble à turbine 7. Dans la position érigée de la grille 16, le plan moyen de la grille 16 est disposé de sorte à être vertical ou proche de la verticale. De façon générale, dans la position érigée, la grille 16 saille au dessus du niveau nominal amont NAM, et même par exemple au-dessus du canal 3, comme cela est visible sur la figure 1.

Le rayon de courbure et le centre de courbure de la grille 16 sont tels que, dans la position rabattue de la grille 16, la partie supérieure 19b de la grille 16 soit horizontale ou faiblement inclinée sur l'horizontale, en venant juste au-dessus du bord de la partie supérieure 10a du carter 10, du bord transversal inférieur 12d de l'ouverture de clapet 12a, et du clapet 12 alors en position rabattue d'ouverture. Le bord transversal supérieur 19a de la grille 16 vient se placer en partie inférieure de l'ouverture de clapet 12a.

Dans une réalisation, il est prévu des moyens d'asservissement des moyens de déplacement et de maintien 22 de la grille 16 et des moyens de déplacement et de maintien du clapet 12 ou de leurs commandes ou moyens de commande.

Dans une réalisation, il est prévu en outre des moyens de détection du degré de colmatage de la grille 16 associés aux moyens d'asservissement des moyens de déplacement et de maintien 22 de la grille, aux moyens de déplacement et de maintien du clapet 12 ou à leurs moyens de commande. En outre, les moyens de commande des moyens de déplacement du dégrilleur lorsqu'un tel dégrilleur est prévu sont associés aux moyens d'asservissement des moyens de déplacement et de maintien 22 de la grille 16, ou aux moyens de déplacement et de maintien du clapet 12, ou à leurs moyens de commande.

Le procédé de mise en oeuvre d'une centrale hydraulique 1 telle qu'elle a été précédemment décrite est le suivant.

On part d'une situation où la grille 16 est dans la position érigée et où le clapet 12 est dans la position érigée de fermeture.

On fait fonctionner l'ensemble à turbine 7, un flux d'eau le traversant. On peut ainsi produire de l'électricité.

Lorsque nécessaire ou lorsque souhaité, en particulier lorsque le degré de colmatage de la grille 16 a atteint un certain degré maximum ou pourrait avoir atteint un certain degré maximum, on commande le déplacement de la grille 16 et ainsi on déplace la grille 16 depuis sa position érigée (figure 1) pour l'amener dans sa position rabattue (figure 2).

D'autre part, on commande le déplacement du clapet 12 et ainsi on déplace le clapet 12 depuis sa position érigée de fermeture pour l'amener dans sa position rabattue d'ouverture.

Ainsi, le bord transversal supérieur 19a de la grille 16 est situé au niveau de l'ouverture de clapet 12a et les débris flottants précédemment arrêtés par la grille 16 sont ainsi chassés vers l'aval du clapet 12 et via l'ouverture de clapet 12a, sans qu'ils ne traversent la roue à pales, qui ainsi n'est pas détériorée, le fonctionnement de la turbine n'étant pas perturbé. Selon une réalisation, avec l'amenée de la grille 16 en position rabattue et l'amenée du clapet 12 en position rabattue, on amène les pales de la roue à pales dans une position où elles tendent à fermer le passage du flux d'eau, ce qui est rendu possible par le choix d'une roue à pales dont les pales peuvent être plus ou moins inclinées et ainsi fermer ou ouvrir plus ou moins l'ouverture de la turbine.

## Revendications

1. Centrale hydraulique pour un ouvrage d'adduction d'eau (2) tel qu'incluant un canal (3) et une structure (4) avec radier (5) et bajoyers, comprenant, associés fonctionnellement :
■ en aval, un ensemble à turbine (7), incluant :
○ une structure portante (9) dans ou parallèle au plan principal de l'ensemble (7), comportant une partie principale (9a) fermée où est situé un carter (10) cylindrique avec ouvertures amont et aval, et une partie supérieure (9b) avec une ouverture (11 b),
○ et une turbine à roue à pales, en particulier pouvant être plus ou moins inclinées, montée dans le carter (10), pouvant avoir une position descendante immergée où l'ensemble (7) est incliné d'amont en aval et du bas vers le haut,
■ en amont, un ensemble à grille (8) d'admission du flux d'eau, apte et destiné à être installé dans et à travers le canal (3), incluant :
o une grille (16) portée par une structure portante (17) et qui, remplissant une fonction d'arrêt de débris, est apte et destinée à arrêter par son côté amont des débris véhiculés par le flux d'eau d'une taille supérieure à celle des passages qu'elle comporte,
o et des moyens d'association (18) de la grille (16) à la structure portante (9) de l'ensemble à turbine (7) et/ou à la structure (4) de l'ouvrage d'adduction d'eau (2), aptes et destinés à ce que la grille (16) puisse être disposée dans et à travers le canal (3) dans une position érigée pour assurer la fonction d'arrêt de débris de sorte que la roue à pales soit traversée par un flux d'eau exempt des débris,
**caractérisée en ce que** :
■ les moyens d'association (18) ont une structure propre à permettre le déplacement d'au moins la portion supérieure de la grille (16) de sorte qu'elle soit apte et destinée à être disposée dans l'une ou l'autre de la position érigée et d'une position rabattue dans laquelle sa partie supérieure (19b) est située au-dessus, et en particulier au moins légèrement en aval, de la partie supérieure (10a) du bord du carter (10), pour une fonction d'évacuation de débris flottants arrêtés par la grille (16) vers l'aval et par-dessus son bord supérieur (19a), sans que les débris ne traversent la roue à pales,
■ l'ensemble à grille (8) comporte des moyens de déplacement et de maintien (22) de la grille (16) qui, responsifs à une commande ou à des moyens de commande, sont aptes et destinés à déplacer la grille (16) entre l'une et l'autre de ses deux positions et de la maintenir dans l'une ou l'autre de ses deux positions.

2. Centrale hydraulique (1) selon la revendication 1, dans laquelle l'ensemble à grille (8) et l'ensemble à turbine (7) sont soit disposés au voisinage l'un de l'autre, en particulier de façon adjacente, et associés entre eux structurellement pour former un tout, les moyens d'association (18) de la grille (16) étant alors associés à la structure portante (9) de l'ensemble à turbine (7), soit dissociés structurellement l'un de l'autre, les moyens d'association (18) de la grille (16) étant alors associés à la structure (4) de l'ouvrage d'adduction d'eau (2) ou à la structure portante (9) de l'ensemble à turbine (7).

3. Centrale hydraulique (1) selon l'une quelconque des revendications 1 et 2, dans laquelle le bord transversal inférieur (21) de l'ensemble à grille (8) et le bord transversal inférieur (14) de l'ensemble à turbine (7) sont proches l'un de l'autre, en particulier sont adjacents, en particulier sont proches du, ou adjacents au, radier (5).

4. Centrale hydraulique (1) selon l'une quelconque des revendications 1 à 3, dans laquelle les moyens d'association (18) de la grille (16) ont une structure, en particulier du type comprenant un arbre monté dans un palier, propre à permettre le pivotement d'au moins la portion supérieure de la grille (16), autour d'un axe (20) disposé transversalement.

5. Centrale hydraulique (1) selon l'une quelconque des revendications 1 à 4, dans laquelle la grille (16) forme un tout solide, déplacé dans son ensemble et disposé dans son ensemble dans l'une ou l'autre des deux positions érigée et rabattue et dans laquelle les moyens d'association (18) de la grille (16) ont une structure propre à permettre le pivotement de la grille (16), autour d'un axe (20) disposé transversalement, proche du, ou adjacent au, radier (5), en particulier sur une course angulaire entre la position érigée et la position rabattue, comprise entre de l'ordre de 35° à 55°.

6. Centrale hydraulique (1) selon la revendication 5, dans laquelle la grille (16) est associée à pivotement à l'ensemble à turbine (7) autour d'un axe (20) disposé transversalement, proche des, ou adjacent aux, bord transversal inférieur (21) de l'ensemble à grille (8) et bord transversal inférieur (14) de l'ensemble à turbine (7), et dans laquelle les moyens d'association (18) de la grille (16) sont associés à la structure portante (9) de l'ensemble à turbine (7).

7. Centrale hydraulique (1) selon l'une quelconque des revendications 1 à 6, comprenant l'une et/ou l'autre des caractéristiques suivantes :
- les moyens (22) de déplacement et de maintien de la grille (16) sont choisis dans la gamme comprenant des moyens de déplacement linéaire tels qu'un vérin, ou des moyens de déplacement rotatif, tels qu'un moteur rotatif, ou des moyens manuels ;
- la grille (16) comprend des barreaux, en particulier régulièrement espacés, s'étendant généralement parallèlement les uns aux autres dans une direction apte à être érigée ;
- la grille (16) est incurvée à convexité tournée vers l'amont et à l'opposé de l'ensemble à turbine (7) et à concavité tournée vers l'aval et vers l'ensemble à turbine (7), de sorte que dans la position rabattue, la partie supérieure (19b) de la grille (16) soit apte et destinée à être horizontale ou faiblement inclinée sur l'horizontale.

8. Centrale hydraulique (1) selon l'une quelconque des revendications 1 à 7, qui comporte :
■ un clapet (12) d'un ensemble à clapet (12, 12a) ayant une ouverture de clapet (12a), qui :
o est localisé, d'une part, adjacent à et au-dessus de la partie supérieure (10a) du bord du carter (10) de la roue à pales et, d'autre part, vers l'aval et le bord transversal supérieur (19a) de la grille (16) dans la position rabattue, lequel bord transversal supérieur (19a) est situé au niveau de l'ouverture de clapet (12a),
o est apte et destiné à être disposé dans et à travers le canal (3),
o est apte et destiné à être disposé dans l'une ou l'autre de deux positions, une position érigée de fermeture pour une fonction d'arrêt de la lame du flux d'eau en regard, et une position rabattue d'ouverture pour une fonction de passage dudit flux d'eau, sans qu'il ne traverse la roue à pales,
■ des moyens d'association du clapet (12) à la structure portante (9) de l'ensemble à turbine (7) et/ou à la structure portante (17) de la grille (16) et/ou à la structure (4) de l'ouvrage d'adduction d'eau (2), ayant une structure propre à permettre le déplacement du clapet (12) de sorte qu'il soit apte et destiné à être disposé dans l'une ou l'autre de ses deux positions érigée de fermeture et rabattue d'ouverture,
■ des moyens de déplacement et de maintien du clapet (12) qui, responsifs à une commande ou à des moyens de commande, sont aptes et destinés à déplacer le clapet (12) entre l'une et l'autre de ses deux positions et de le maintenir dans l'une ou l'autre de ses deux positions,
■ et des moyens d'asservissement des moyens de déplacement et de maintien de la grille (16) et des moyens de déplacement et de maintien du clapet (12) ou de leurs commandes ou moyens de commande, de telle sorte que :
o lorsque la grille (16) est dans la position érigée, le clapet (12) assure une fonction de fermeture, étant apte et destiné à être en position érigée de fermeture de sorte que le flux d'eau ayant préalablement traversé l'ensemble à grille (8) et exempt des débris arrêtés par celui-ci traverse la roue à pales sans pouvoir traverser l'ouverture de clapet (12a),
o et que, lorsque la grille (16) est dans la position rabattue, le bord transversal supérieur (19a) de la grille (16) est situé au niveau de l'ouverture de clapet (12a) qui assure une fonction de chasse de débris flottants arrêtés par la grille (16), vers l'aval du clapet (12) et via l'ouverture de clapet (12a), sans que les débris évacués ne traversent la roue à pales.

9. Centrale hydraulique (1) selon la revendication 8, comprenant l'une et/ou l'autre des caractéristiques suivantes :
- l'ensemble à clapet (12, 12a) et l'ensemble à turbine (7) sont associés entre eux structurellement, les moyens d'association du clapet (12) étant associés à la structure portante (9) de l'ensemble à turbine (7) ;
- les moyens d'association du clapet (12) ont une structure, en particulier du type comprenant un arbre monté dans un palier, propre à permettre le pivotement du clapet (12) autour d'un axe (12b) disposé transversalement, en particulier vers le bord transversal inférieur (12c) du clapet (12), vers le bord supérieur (10a) du carter (10) de la roue à pales et au voisinage du bord transversal supérieur (19a) de la grille (16) en position rabattue, en particulier sur une course angulaire entre la position érigée de fermeture et la position rabattue d'ouverture, comprise entre de l'ordre de 50° à 90° ;
- les moyens de déplacement et de maintien du clapet (12) sont choisis dans la gamme comprenant des moyens de déplacement linéaire tels qu'un vérin, ou des moyens de déplacement rotatif tels qu'un moteur rotatif, ou des moyens manuels ;
- la centrale hydraulique (1) comporte en outre des moyens de détection du degré de colmatage de la grille (16) associés aux moyens d'asservissement des moyens de déplacement et de maintien (22) de la grille (16), aux moyens de déplacement et de maintien du clapet (12), ou à leurs moyens de commande ;
- le plan principal de l'ensemble à turbine (7), le plan du clapet (12) dans sa position érigée de fermeture, et le plan défini par les bords transversaux supérieur (19a) et inférieur (21) de l'ensemble à grille (8) s'étendent dans un ou des plans, en particuliers voisins, inclinés d'amont en aval et du bas vers le haut avec un angle compris entre 35° et 60° ;
- la centrale hydraulique (1) comporte en outre une paroi de séparation et de déflection (15) qui s'étend vers l'aval de l'ensemble à turbine (7) et de l'ensemble à clapet (12, 12a), est disposée entre la partie supérieure (10a) du bord du carter (10) de la roue à pales et le bord transversal inférieur (12d) de l'ouverture de clapet (12a) de sorte à séparer les flux d'eau respectifs qui les traversent, la dite paroi de séparation et de détection (15) étant inclinée d'amont en aval et de haut en bas.

10. Centrale hydraulique (1) selon l'une quelconque des revendications 1 à 9, dans laquelle l'ensemble à turbine (7) est équipé du côté amont et en regard de l'ouverture du carter (10) de la roue à pales d'une grille d'admission du flux d'eau apte et destinée à arrêter par son côté amont des débris véhiculés par le flux d'eau d'une taille supérieure à celle des passages qu'elle comporte, ces passages étant d'une taille plus petite que la taille des passages de la grille (16) de l'ensemble à grille (8), lequel constitue alors un ensemble à pré-grille.

11. Centrale hydraulique (1) selon la revendication 10, dans laquelle l'ensemble à turbine (7) est équipé du côté amont d'un dégrilleur, en particulier d'un dégrilleur rotatif, associé à la grille d'admission de l'ensemble à turbine (7), et dans laquelle les moyens de commande des moyens de déplacement du dégrilleur sont associés aux moyens d'asservissement des moyens de déplacement et de maintien (22) de la grille (16), ou aux moyens de déplacement et de maintien du clapet (12), ou à leurs moyens de commande.

12. Centrale hydraulique (1) selon l'une quelconque des revendications 6 à 11 en ce qu'elles dépendent de la revendication 6, dans laquelle la roue à pales et le carter (10) de l'ensemble à turbine (7) sont agencés de sorte à être aptes et destinés à être disposés dans l'une ou l'autre de deux positions, une position descendante immergée pour une fonction de production électrique, et une position relevée émergée pour une fonction d'accès à l'ensemble à turbine (7) et/ou de libération du canal (3) de passage du flux d'eau, la grille (16) de l'ensemble à grille (8) étant déplacée également avec le carter (10) de l'ensemble à turbine (7).

13. Procédé de mise en oeuvre d'une centrale hydraulique (1) selon l'une quelconque des revendications 8 à 12, en vue d'évacuer les débris flottants arrêtés par la grille (16), dans lequel :
■ on part d'une situation où la grille (16) est dans la position érigée et où le clapet (12) est dans la position érigée de fermeture,
■ on fait fonctionner l'ensemble à turbine (7), un flux d'eau le traversant,
■ lorsque nécessaire ou souhaité, en particulier lorsque le degré de colmatage de la grille (16) a atteint un certain degré maximum ou pourrait avoir atteint un certain degré maximum :
○ on commande le déplacement de la grille (16) et ainsi on déplace la grille (16) depuis sa position érigée pour l'amener dans sa position rabattue,
o et on commande le déplacement du clapet (12) et ainsi on déplace le clapet (12) depuis sa position érigée de fermeture pour l'amener dans sa position rabattue d'ouverture, de sorte que le bord transversal supérieur de la grille (16) est situé au niveau de l'ouverture de clapet (12a), les débris flottants arrêtés par la grille (16) étant ainsi chassés vers l'aval du clapet (12) et via l'ouverture de clapet (12a), sans qu'ils ne traversent la roue à pales.

14. Procédé selon la revendication 13, dans lequel avec l'amenée de la grille (16) en position rabattue et l'amenée du clapet (12) en position rabattue, on amène les pales de la roue à pales dans une position où elles tendent à fermer le passage du flux d'eau.

## Patentansprüche

1. Wasserkraftwerk für ein Wasserversorgungsbauwerk (2), wie beispielweise ein Wasserversorgungsbauwerk das einen Kanal (3) und eine Struktur (4) mit Sohle (5) und Seitenwänden beinhaltet, umfassend, funktional verbunden:
■ stromabwärts eine Turbinenanordnung (7), einschließlich:
o einer Tragstruktur (9) in der oder parallel zu der Hauptebene der Anordnung (7), umfassend ein geschlossenes Hauptteil (9a), wo sich ein zylindrisches Gehäuse (10) mit vor- und nachgelagerten Öffnungen befindet, und einem oberen Teil (9b) mit einer Öffnung (11 b),
o und einer Turbine mit Schaufelrädern, die insbesondere mehr oder weniger geneigt sein können, die im Gehäuse (10) montiert ist, das eine abgesenkte eingetauchte Position aufweisen kann, in der die Anordnung (7) von stromaufwärts nach stromabwärts und von unten nach oben geneigt ist,
■ stromaufwärts eine Rechenanordnung (8) für den Einlass des Wasserstromes, die geeignet und dazu bestimmt ist, im und quer zum Kanal (3) eingebaut zu werden, einschließlich:
o eines Rechens (16), der von einer Tragstruktur (17) getragen wird und der eine Rückhaltefunktion von Abfall erfüllt und geeignet und dazu bestimmt ist, durch seine stromaufwärtige Seite vom Wasserfluss mitgeführte Abfälle zurückzuhalten, deren Größe über der der Durchlässe liegt, die er aufweist,
o und Verbindungsmittel (18) des Rechens (16) mit der Tragstruktur (9) der Turbineneinheit (7) und/oder mit der Struktur (4) des Wasserversorgungsbauwerks (2), die geeignet und dazu bestimmt sind, dass der Rechen (16) im und quer zum Kanal (3) in einer aufrechten Position angeordnet werden kann, um die Rückhaltefunktion von Abfall sicherzustellen, sodass das Schaufelrad von einem Wasserstrom frei von Abfall passiert wird,
**dadurch gekennzeichnet, dass**
■ die Verbindungsmittel (18) eine geeignete Struktur aufweisen, um zumindest die Verlagerung des oberen Teils des Rechens (16) zu ermöglichen, sodass er geeignet und dazu bestimmt ist, in der einen oder anderen aufrechten Position und einer abgesenkten Position angeordnet zu werden, in der sich sein oberer Teil (19b) oberhalb und insbesondere zumindest leicht stromabwärts von dem oberen Teil (10a) des Rands des Gehäuses (10) befindet, für eine Funktion der Beseitigung von schwimmendem Abfall, der von dem Rechen (16) stromabwärts und über dessen oberen Rand (19a) zurückgehalten wird, ohne dass die Abfälle das Schaufelrad passieren,
■ die Rechenanordnung (8) Mittel zur Verlagerung und zum Halten (22) des Rechens (16) umfasst, die als Reaktion auf eine Steuerung oder Steuerungsmittel geeignet und dazu bestimmt sind, den Rechen (16) zwischen der einen und der anderen seiner beiden Positionen zu verlagern und ihn in der einen oder anderen seiner beiden Positionen zu halten.

2. Wasserkraftwerk (1) nach Anspruch 1, wobei die Rechenanordnung (8) und die Turbinenanordnung (7) entweder benachbart zueinander angeordnet sind, insbesondere angrenzend, und strukturell miteinander verbunden sind, um eine Gesamteinheit zu bilden, wobei die Verbindungsmittel (18) des Rechens (16) dann mit der Tragstruktur (9) der Turbineneinheit (7) verbunden sind oder strukturell voneinander getrennt sind, wobei die Verbindungsmittel (18) des Rechens (16) dann mit der Struktur (4) des Wasserversorgungsbauwerks (2) oder der Tragstruktur (9) der Turbinenanordnung (7) verbunden sind.

3. Wasserkraftwerk (1) nach einem der Ansprüche 1 und 2, wobei die untere Querkante (21) der Rechenanordnung (8) und die untere Querkante (14) der Turbinenanordnung (7) nahe beieinander sind, insbesondere angrenzend sind, und insbesondere nahe oder angrenzend an der Sohle (5) sind.

4. Wasserkraftwerk (1) nach einem der Ansprüche 1 bis 3, wobei die Verbindungsmittel (18) des Rechens (16) eine Struktur aufweisen, insbesondere von der Art einer in einem Lager montierten Welle, die geeignet ist, das Schwenken zumindest des oberen Teils des Rechens (16) um eine quer angeordnete Achse (20) zu ermöglichen.

5. Wasserkraftwerk (1) nach einem der Ansprüche 1 bis 4, wobei der Rechen (16) eine solide Gesamteinheit bildet, verlagert als eine Anordnung und angeordnet als eine Anordnung in der einen oder anderen der beiden Positionen, aufrecht und abgesenkt, und wobei die Verbindungsmittel (18) des Rechens (16) eine Struktur aufweisen, die geeignet ist, das Schwenken des Rechens (16) um eine quer angeordnete Achse (20) zu ermöglichen, nahe oder angrenzend an der Sohle (5), insbesondere auf einer winkelförmigen Laufbahn zwischen der aufrechten Position und der abgesenkten Position zwischen etwa 35 ° bis 55°.

6. Wasserkraftwerk (1) nach Anspruch 5, wobei der Rechen (16) mit der Turbinenanordnung (7) schwenkbar um eine Achse (20) verbunden ist, die nahe der oder angrenzend an der unteren Querkante (21) der Rechenanordnung (8) und der unteren Querkante (14) der Turbinenanordnung (7) quer angeordnet ist, und wobei die Verbindungsmittel (18) des Rechens (16) mit der Tragstruktur (9) der Turbinenanordnung (7) verbunden sind.

7. Wasserkraftwerk (1) nach einem der Ansprüche 1 bis 6, das das eine und/oder das andere der folgenden Merkmale umfasst:
- die Mittel zur Verlagerung und zum Halten (22) des Rechens (16) sind aus der Gruppe ausgewählt, die lineare Verlagerungsmittel wie einen Hubzylinder oder rotierende Verlagerungsmittel wie einen rotierenden Motor oder manuelle Mittel umfasst;
- der Rechen (16) umfasst Gitterstäbe, insbesondere regelmäßig beabstandete, die sich in der Regel parallel zueinander in eine Richtung erstrecken, die geeignet ist, aufgerichtet zu werden;
- der Rechen (16) ist mit stromaufwärts gerichteter Konvexität und weg von der Turbinenanordnung (7) und mit stromabwärts gerichteter Konkavität und zur Turbinenanordnung (7) gekrümmt, sodass der obere Teil (19b) des Rechens (16) in der abgesenkten Position geeignet und dazu bestimmt ist, horizontal oder leicht geneigt zur Horizontalen zu sein.

8. Wasserkraftwerk (1) nach einem der Ansprüche 1 bis 7, umfassend:
■ ein Klappventil (12) einer Klappventilanordnung (12, 12a), das eine Klappventilöffnung (12a) aufweist, und das:
o sich einerseits angrenzend und über dem oberen Teil (10a) der Kante des Gehäuses (10) des Schaufelrads und andererseits stromabwärts und hin zur oberen Querkante (19a) des Rechens (16) in der abgesenkten Position befindet, wobei sich die obere Querkante (19a) in Höhe der Klappventilöffnung (12a) befindet,
o geeignet und dazu bestimmt ist, im und quer zum Kanal (3) angeordnet zu werden,
o geeignet und dazu bestimmt ist, in der einen oder der anderen von zwei Positionen angeordnet zu werden, einer aufrechten Schließposition für eine Rückhaltefunktion des betreffenden Wasserstromes gegenüber, und einer abgesenkten Öffnungsposition für eine Durchlassfunktion des Wasserstromes, ohne dass er das Schaufelrad passiert,
■ Mittel zur Verbindung des Klappventils (12) mit der Tragstruktur (9) der Turbinenanordnung (7) und/oder mit der Tragstruktur (17) des Rechens (16) und/oder mit der Struktur (4) des Wasserversorgungsbauwerks (2), die eine Struktur aufweisen, die geeignet ist, die Verlagerung des Klappventils (12) zu ermöglichen, sodass es geeignet und dazu bestimmt ist, in der einen oder der anderen seiner zwei Positionen aufrecht zum Schließen und abgesenkt zum Öffnen angeordnet zu werden,
■ Mittel zur Verlagerung und zum Halten des Klappventils (12), die als Reaktion auf eine Steuerung oder Steuerungsmittel geeignet und dazu bestimmt sind, das Klappventil (12) zwischen der einen und der anderen seiner beiden Positionen zu verlagern und es in der einen oder anderen seiner beiden Positionen zu halten,
■ und Regelungsmittel der Mittel zur Verlagerung und zum Halten des Rechens (16) und der Mittel zur Verlagerung und zum Halten des Klappventils (12) oder ihrer Steuerungen oder Steuerungsmittel, sodass:
o das Klappventil (12) eine Schließfunktion gewährleistet, wenn der Rechen (16) in der aufrechten Position ist, wobei es geeignet und dazu bestimmt ist, in aufrechter Schließposition zu sein, sodass der Wasserstrom, der zuvor die Rechenanordnung (8) passiert hat und frei von Abfällen ist, die von dieser zurückgehalten werden, das Schaufelrad passiert, ohne die Klappventilöffnung (12a) passieren zu können,
o und dass, wenn der Rechen (16) in der abgesenkten Funktion ist, sich die obere Querkante (19a) des Rechens (16) in Höhe der Klappventilöffnung (12a) befindet, die eine Spülfunktion der von dem Rechen (16) zurückgehaltenen schwimmenden Abfälle gewährleistet, stromabwärts des Klappventils (12) und über die Klappventilöffnung (12a), ohne dass die beseitigten Abfälle das Schaufelrad passieren.

9. Wasserkraftwerk (1) nach Anspruch 8, das das eine und/oder das andere der folgenden Merkmale umfasst:
- die Klappventilanordnung (12, 12a) und die Turbinenanordnung (7) sind strukturell miteinander verbunden, wobei die Verbindungsmittel des Klappventils (12) mit der Tragstruktur (9) der Turbinenanordnung (7) verbunden sind;
- die Verbindungsmittel des Klappventils (12) weisen eine Struktur auf, insbesondere von der Art einer in einem Lager montierten Welle, die geeignet ist, das Schwenken des Klappventils (12) um eine quer angeordnete Achse (12b) zu ermöglichen, insbesondere zur unteren Querkante (12c) des Klappventils (12), zur oberen Kante (10a) des Gehäuses (10) des Schaufelrads und in der Nähe der oberen Querkante (19a) des Rechens (16) in abgesenkter Position, insbesondere auf einer winkelförmigen Laufbahn zwischen der aufrechten Schließposition und der abgesenkten Öffnungsposition zwischen etwa 50° bis 90°;
- die Mittel zur Verlagerung und zum Halten des Klappventils (12) sind aus der Gruppe ausgewählt, die lineare Verlagerungsmittel wie einen Hubzylinder oder rotierende Verlagerungsmittel wie einen rotierenden Motor oder manuelle Mittel umfasst;
- das Wasserkraftwerk (1) umfasst ferner Mittel zur Feststellung des Grades der Verstopfung des Rechens (16), die mit den Regelungsmitteln der Mittel zur Verlagerung und zum Halten (22) des Rechens (16), den Mitteln zur Verlagerung und zum Halten des Klappventils (12) oder ihren Steuerungsmitteln verbunden sind;
- die Hauptebene der Turbinenanordnung (7), die Ebene des Klappventils (12) in seiner aufrechten Schließposition und die Ebene, die durch die oberen Querkanten (19a) und unteren Querkanten (21) der Rechenanordnung (8) definiert sind, liegen in einer oder mehreren, insbesondere benachbarten Ebenen, die von stromaufwärts nach stromabwärts und von unten nach oben mit einem Winkel zwischen 35° und 60°geneigt sind;
- das Wasserkraftwerk (1) umfasst ferner eine Trenn- und Ablenkwand (15), die sich stromabwärts von der Turbinenanordnung (7) und der Klappventilanordnung (12, 12a) erstreckt und die zwischen dem oberen Teil (10a) der Kante des Gehäuses (10) des Schaufelrads und der unteren Querkante (12d) der Klappventilöffnung (12a) angeordnet ist, um die betreffenden Wasserströme zu trennen, die sie passieren, wobei die Trenn- und Ablenkwand (15) von stromaufwärts nach stromabwärts und von oben nach unten geneigt ist.

10. Wasserkraftwerk (1) nach einem der Ansprüche 1 bis 9, wobei die Turbinenanordnung (7) auf der stromaufwärtigen Seite und gegenüber der Öffnung des Gehäuses (10) des Schaufelrads mit einem Rechen für den Einlass des Wasserstroms ausgestattet ist, der geeignet und dazu bestimmt ist, durch seine stromaufwärtige Seite vom Wasserstrom mitgeführte Abfälle zurückzuhalten, deren Größe über der der Durchlässe liegt, die er aufweist, wobei diese Öffnungen eine kleinere Größe als die Größe der Öffnungen des Rechens (16) der Rechenanordnung (8) aufweisen, die dann eine Vorrechenanordnung bildet.

11. Wasserkraftwerk (1) nach Anspruch 10, wobei die Turbinenanordnung (7) auf der stromaufwärtigen Seite mit einem Rechenreiniger, insbesondere einem rotierenden Rechenreiniger ausgestattet ist, der mit dem Einlassrechen der Turbinenanordnung (7) verbunden ist, und wobei die Steuerungsmittel der Verlagerungsmittel des Rechenreinigers mit den Regelungsmitteln der Mittel zur Verlagerung und zum Halten (22) des Rechens (16) oder den Mitteln zur Verlagerung und zum Halten des Klappventils (12) oder ihren Steuerungsmitteln verbunden sind.

12. Wasserkraftwerk (1) nach einem der Ansprüche 6 bis 11, insofern sie von Anspruch 6 abhängig sind, wobei das Schaufelrad und das Gehäuse (10) der Turbinenanordnung (7) so angeordnet sind, um geeignet und dazu bestimmt zu sein, in der einen oder anderen von zwei Positionen angeordnet zu werden, einer nach unten gerichteten eingetauchten Position für eine Stromerzeugungsfunktion und einer angehobenen aufgetauchten Position für eine Funktion des Zugangs zur Turbinenanordnung (7) und/oder des Freimachens des Kanals (3) des Durchlasses des Wasserstroms, wobei der Rechen (16) der Rechenanordnung (8) ebenfalls mit dem Gehäuse (10) der Turbinenanordnung (7) verlagert wird.

13. Verfahren zum Einsatz eines Wasserkraftwerks (1) nach einem der Ansprüche 8 bis 12 um die vom Rechen (16) zurückgehaltenen schwimmenden Abfälle zu beseitigen, wobei:
▪ von einer Situation ausgegangen wird, wo der Rechen (16) in der aufrechten Position ist und wo das Klappventil (12) in der aufrechten Schließposition ist,
▪ die Turbinenanordnung (7) betrieben wird und ein Wasserstrom sie passiert,
▪ falls notwendig oder gewünscht, besonders wenn der Grad der Verstopfung des Rechens (16) ein gewisses Höchstmaß erreicht hat oder ein gewisses Höchstmaß erreicht haben könnte:
o wird die Verlagerung des Rechens (16) gesteuert und so der Rechen (16) von seiner aufrechten Schließposition verlagert, um ihn in seine abgesenkte Position zu bringen,
o und wird die Verlagerung des Klappventils (12) gesteuert und so das Klappventil (12) von seiner aufrechten Position verlagert, um es in seine abgesenkte Öffnungsposition zu bringen, sodass sich die obere Querkante des Rechens (16) in Höhe der Klappventilöffnung (12a) befindet und die von dem Rechen (16) zurückgehaltenen schwimmenden Abfälle so stromabwärts des Klappventils (12) und durch die Klappventilöffnung (12a) gespült werden, ohne dass sie das Schaufelrad passieren.

14. Verfahren nach Anspruch 13, bei dem mit Platzierung des Rechens (16) in abgesenkter Position und Platzierung des Klappenventils (12) in abgesenkter Position die Schaufeln des Schaufelrads in eine Position gebracht werden, in der sie den Durchfluss des Wasserstroms mehr oder weniger sperren.

## Claims

1. Hydro-electric power plant for a civil waterworks (2), such as a civil waterworks which includes a channel (3) and a structure (4) with a bottom slab (5) and side walls, comprising, operatively associated:
▪ a downstream turbine unit (7) including:
o a supporting structure (9) in or parallel to the main plane of the assembly (7), comprising a closed main portion (9a) in which is located a cylindrical housing (10) with upstream and downstream openings, and an upper portion (9b) with an opening (11b),
o and a turbine with impeller, in particular with blades which can be angled to a greater or lesser extent, mounted in the housing (10), which can be in an immersed downward position where the unit (7) is tilted from upstream to downstream and from the bottom toward the top,
▪ a grating assembly (8) upstream for allowing the inflow of water, adapted and intended to be installed in and across the channel (3), including:
o a grating (16) supported by a supporting structure (17) and which, fulfilling a debris-stopping function, is adapted and intended to stop, on its upstream side, any debris carried by the flow of water that is larger than the openings through the grating,
o and means (18) for associating the grating (16) with supporting structure (9) of the turbine unit (7) and/or structure (4) of the civil waterworks (2), adapted and intended for placing the grating (16) in and across the channel (3) in an upright position in order to perform its debris-stopping function so that water free of debris travels through the impeller,
**characterized in that**:
▪ the association means (18) have a structure that allows the movement of at least the upper portion of the grating (16) such that it is adapted and intended for placement in one or the other of the upright position and a folded-down position in which its upper portion (19b) is located above, and in particular at least slightly downstream of, the upper portion (10a) of the edge of the housing (10), in order to discharge, in the downstream direction and above said upper edge (19a), the floating debris stopped by the grating (16), without the debris passing through the impeller,
▪ the grating assembly (8) comprises grating (16) movement and retention means (22) which, in response to a control or to control means, are adapted and intended to move the grating (16) from one to the other of its two positions and to retain it in one or the other of its two positions.

2. Hydro-electric power plant (1) according to claim 1, wherein the grating assembly (8) and the turbine unit (7) are either arranged near one another, in particular adjacent to one another, and structurally associated with each other to form a structural unit, the grating (16) association means (18) then being associated with the supporting structure (9) of the turbine unit (7), or structurally dissociated from one another, the grating (16) association means (18) then being associated with the structure (4) of the civil waterworks (2) or with the supporting structure (9) of the turbine unit (7).

3. Hydro-electric power plant (1) according to either of claims 1 and 2, wherein the lower transverse edge (21) of the grating assembly (8) and the lower transverse edge (14) of the turbine unit (7) are close to each other, in particular are adjacent, and in particular are close to, or adjacent to, the bottom slab (5).

4. Hydro-electric power plant (1) according to any one of claims 1 to 3, wherein the grating (16) association means (18) have a structure, in particular of the type comprising a shaft mounted in a bearing, suitable to allow at least the upper portion of the grating (16) to pivot about a transverse axis (20).

5. Hydro-electric power plant (1) according to any one of claims 1 to 4, wherein the grating (16) form a solid unit, moved as a unit and placed as a unit in one of the two positions, upright or folded down, and wherein the grating (16) association means (18) have a structure allowing the grating (16) to pivot about a transverse axis (20) arranged close or adjacent to the bottom slab (5), in particular following an angular path between the upright position and the folded-down position of about 35° to 55°.

6. Hydro-electric power plant (1) according to claim 5, wherein the grating (16) is pivotally associated with the turbine unit (7) so that it pivots about a transverse axis (20) arranged close to or adjacent to the lower transverse edge (21) of the grating assembly (8) and the lower transverse edge (14) of the turbine unit (7), and wherein the grating (16) association means (18) are associated with the supporting structure (9) of the turbine unit (7).

7. Hydro-electric power plant (1) according to any one of claims 1 to 6, comprising one and/or the other of the following features:
- the grating (16) movement and retention means (22) are selected from among an assortment comprising linear displacement means such as a jack, or rotary displacement means such as a rotary engine, or manual means;
- the grating (16) comprises bars, in particular bars regularly spaced apart, in general extending parallel to one another in a direction that can be raised;
- the grating (16) is curved with its convexity facing upstream and away from the turbine unit (7) and its concavity facing downstream and towards the turbine unit (7), so that when in the folded-down position, the upper portion (19b) of the grating (16) is adapted and intended to be horizontal or slightly inclined to the horizontal.

8. Hydro-electric power plant (1) according to any one of claims 1 to 7, comprising:
▪ a flap valve (12) of a flap valve assembly (12, 12a) having a valve opening (12a), which:
o is located adjacent to and above the upper portion (10a) of the edge of the impeller housing (10) and in the downstream direction with the upper transverse edge (19a) of the grating (16) in the folded-down position, said upper transverse edge (19a) being level with the valve opening (12a),
o is adapted and intended for placement in and across the channel (3),
o is adapted and intended for placement in either of two positions, an upright closure position for stopping the incoming flow of water, and a folded-down opening position for allowing said flow of water to pass without passing through the impeller,
▪ means for associating the flap valve (12) with the supporting structure (9) of the turbine unit (7) and/or with the supporting structure (17) of the grating (16) and/or with the structure (4) of the civil waterworks (2), having a structure which allows the movement of the flap valve (12) so that it is adapted and intended to be arranged in one of its two upright closure and folded down opening positions,
▪ flap valve (12) movement and retention means which, in response to a control or to control means, are adapted and intended to move the flap valve (12) between one and the other of its two positions and to retain it in one or the other of its two positions,
▪ and controller means for the grating (16) movement and retention means and for the flap valve (12) movement and retention means or for their controls or control means, such that:
o when the grating (16) is in the upright position, the flap valve (12) performs a closure function, being adapted and intended to be in the upright closure position such that the flow of water having previously passed through the grating assembly (8) and free of the debris stopped by said grating assembly passes through the impeller without being able to pass through the valve opening (12a),
o and when the grating (16) is in the folded-down position, the upper transverse edge (19a) of the grating (16) is level with the valve opening (12a), which acts to send, downstream of the flap valve (12) and through the valve opening (12a), the floating debris stopped by the grating (16), without the discharged debris passing through the impeller.

9. Hydro-electric power plant (1) according to claim 8, comprising one and/or the other of the following features:
- the flap valve assembly (12, 12a) and the turbine unit (7) are structurally associated with each other, the flap valve (12) association means being associated with the supporting structure (9) of the turbine unit (7);
- the flap valve (12) association means have a structure, particularly of the type comprising a shaft mounted in a bearing, adapted to allow the flap valve (12) to pivot about an axis (12b) arranged transversely, in particular toward the lower transverse edge (12c) of the flap valve (12), toward the upper edge (10a) of the impeller housing (10), and near the upper transverse edge (19a) of the grating (16) in the folded-down position, in particular following an angular path between the upright closure position and the folded-down opening position of about 50° to 90 °;
- the flap valve (12) movement and retention means are selected from among an assortment comprising linear displacement means such as a jack, or rotary displacement means such as a rotary engine, or manual means;
- the hydro-electric power plant (1) further comprises means for detecting the degree of clogging of the grating (16), said means being associated with the controller means for the grating (16) movement and retention means (22), the flap valve (12) movement and retention means, or their control means;
- the main plane of the turbine unit (7), the plane of the flap valve (12) in its upright closure position, and the plane defined by the upper (19a) and lower (21) transverse edges (19a) of the grating assembly (8), lie in one or more planes, in particular adjacent planes, inclined from upstream to downstream and from the bottom toward the top at an angle of between 35° to 60 °;
- the hydro-electric power plant (1) further comprises a deflecting and partitioning wall (15) extending downstream from the turbine unit (7) and flap valve assembly (12, 12a), arranged between the upper portion (10a) of the edge (10) of the impeller housing and the lower transverse edge (12d) of the valve opening (12a) so as to separate the flows of water respectively passing through them, said deflecting and partitioning wall (15) being inclined from upstream to downstream and from the top downwards.

10. Hydro-electric power plant (1) according to any one of claims 1 to 9, wherein the turbine unit (7) is equipped, on the upstream side and opposite the opening (10) of the impeller housing, with a water intake grating that is adapted and intended to stop, on its upstream side, any debris carried by the water of a size greater than the openings through said grating, these openings being smaller in size than the openings through the grating (16) of the grating assembly (8), which then constitutes a pre-grating assembly.

11. Hydro-electric power plant (1) according to claim 10, wherein the turbine unit (7) is equipped on its upstream side with a scraper, particularly a rotating scraper, associated with the intake grating of the turbine unit (7), and wherein the control means for the scraper movement means are associated with the controller means for the grating (16) movement and retention means (22), or the flap valve (12) movement and retention means, or their control means.

12. Hydro-electric power plant (1) according to any one of claims 6 to 11 when dependent on claim 6, wherein the impeller and the housing (10) of the turbine unit (7) are arranged so as to be adapted and intended for placement in one of two positions, an immersed downward position for an electricity generation function, and a non-immersed raised position for access to the turbine unit (7) and/or for clearing the water flow channel (3), the grating (16) of the grating assembly (8) also being moved with the housing (10) of the turbine unit (7).

13. Method for utilizing a hydro-electric power plant (1) according to any one of claims 8 to 12, for the purposes of discharging the floating debris stopped by the grating (16), wherein:
▪ initially the grating (16) is in the upright position and the flap valve (12) is in the upright closure position,
▪ the turbine unit (7) is placed in operation, with water flowing through it,
▪ when necessary or when desired, particularly when the degree of clogging of the grating (16) has reached a certain maximum degree or may have reached a certain maximum degree:
o the grating (16) is told to move and the grating (16) is accordingly moved from its upright position to its folded-down position,
o and the flap valve (12) is told to move and the flap valve (12) is accordingly moved from its upright closure position to its folded-down opening position, such that the upper transverse edge of the grating (16) is level with the valve opening (12a), the floating debris stopped by the grating (16) thus being sent downstream of the flap valve (12) and through the valve opening (12a) without passing through the impeller.

14. Method according to claim 13, wherein, with the grating (16) placed in the folded-down position and the flap valve (12) placed in the folded-down position, the blades of the impeller are placed in a position where they more or less close off the passage of the stream of water.
